(19) Europäisches Patentamt
European Patent Office
Office européen des brevets

(11) EP 4 756 525 A1

(12) **EUROPEAN PATENT APPLICATION**

(43) Date of publication:
**10.06.2026 Bulletin 2026/24**

(21) Application number: **25156862.2**

(22) Date of filing: **10.02.2025**

(51) International Patent Classification (IPC):
**G02F 1/21** $^{(2006.01)}$    **G02F 1/225** $^{(2006.01)}$
**G06N 3/067** $^{(2006.01)}$    **G02F 1/01** $^{(2006.01)}$

(52) Cooperative Patent Classification (CPC):
**G02F 1/212; G02F 1/225; G06N 3/0675;**
G02F 1/0147; G02F 2203/15; G06N 3/048

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2024 KR 20240179951**
**13.01.2025 KR 20250005056**

(71) Applicant: **Seoul National University R&DB Foundation**
**Seoul 08826 (KR)**

(72) Inventors:
• **YU, Sunkyu**
**08826 Seoul (KR)**
• **PARK, Namkyoo**
**08826 Seoul (KR)**
• **PIAO, Xianji**
**02504 Seoul (KR)**
• **PARK, Kunwoo**
**08826 Seoul (KR)**

(74) Representative: **Zacco Sweden AB**
**P.O. Box 5581**
**Löjtnantsgatan 21**
**114 85 Stockholm (SE)**

(54) **NONLINEAR UNITARY OPTICAL DEVICE**

(57)    The present invention relates to a nonlinear unitary optical device. The nonlinear unitary optical device includes a first nonlinear unitary unit of one dimension positioned on an upper optical channel, a second nonlinear unitary unit of one dimension positioned on a lower optical channel, and an interferometer configured to couple the first nonlinear unitary unit and the second nonlinear unitary unit.

## FIG. 1

**Description**

BACKGROUND

**1. Field of the Invention**

The present invention relates to a nonlinear unitary optical device which provides optical nonlinearity that preserves a norm through self-phase modulation in an optical neural network and is capable of implementing a nonlinear unitary operation with high expressivity of a deep neural network through control of a phase shifter.

**2. Discussion of Related Art**

In order to continuously develop artificial intelligence technologies such as deep learning technologies, the development of hardware that supports energy-efficient and high-speed operations has become important. Optical hardware is a promising candidate capable of satisfying these demands, and attempts are being made to accelerate deep learning using a photonic integrated circuit, a diffractive deep neural network, or a scattering system.

However, due to the linearity of the Maxwell equation which is a governing equation of optical systems, optically implementing nonlinear expressivity essential for deep learning remains a major challenge.

The background technology of the present invention is disclosed in Korean Patent Publication No. 10-2021-0005273 (published on January 13, 2021).

The above information disclosed in this BACKGROUND ART section is only for enhancement of understanding of the background of the present disclosure, and therefore it may contain information that does not form a related art.

SUMMARY OF THE INVENTION

Conventionally, there have been efforts to implement nonlinearity in optical systems through light-matter interactions. For example, attempts utilizing photodetection, phase-change material, or scatterer-based nonlinearities have been made.

However, these methods have a problem of reducing the advantages of optical deep learning because a significant amount of electronic signal processing is required. On the other hand, a method of directly changing light intensity through saturable absorption, cross-gain modulation, or quantum interference to use optical nonlinearity has a problem such as gradient vanishing during a learning process and requires loss compensation.

The present invention is directed to providing a nonlinear unitary (NU) optical device which provides optical nonlinearity that preserves a norm through self-phase modulation in an optical neural network and is capable of implementing a nonlinear unitary operation with high expressivity of a deep neural network through control of a phase shifter.

However, the technical objects to be solved by the present disclosure are not limited to the above matters, and other objects that are not described herein will be clearly understood by those skilled in the art based on the following disclosure.

According to an aspect of the present invention, there is provided a nonlinear unitary optical device including a first nonlinear unitary unit of one dimension positioned on an upper optical channel, a second nonlinear unitary unit of one dimension positioned on a lower optical channel, and an interferometer configured to couple the first nonlinear unitary unit and the second nonlinear unitary unit.

The first nonlinear unitary unit may include a first waveguide connected to the upper optical channel, and a first resonator coupled to a side surface of the first waveguide.

The first resonator may have a first resonant frequency and may be side-coupled to the first waveguide with strength defined by a coupling lifetime.

The first resonator may include a modulation configured to adjust a resonance change.

The modulation device may be any one of an electro-optical modulation device and a thermo-optical modulation device.

The second nonlinear unitary unit may include a second waveguide connected to the lower optical channel, and a second resonator coupled to a side surface of the second waveguide.

The second resonator may have a second resonant frequency and may be side-coupled to the second waveguide with strength defined by a coupling lifetime.

The second resonator may include a modulation configured to adjust a resonance change.

The modulation device may be any one of an electro-optical modulation device and a thermo-optical modulation device.

The interferometer may be a Mach-Zehnder interferometer.

BRIEF DESCRIPTION OF THE DRAWINGS

The above description and other objects, features, and advantages of the present invention will become more apparent to those of ordinary skill in the art by describing exemplary embodiments thereof in detail with reference to the accompanying drawings, in which:

FIG. 1 is a diagram illustrating a nonlinear unitary optical device according to one embodiment of the present invention;
FIG. 2 is a diagram illustrating a one-dimensional unitary unit which is a basic circuit component of the nonlinear unitary optical device according to one embodiment of the present invention;
FIGs. 3A and 3B show diagrams illustrating linear and nonlinear phase shift values of the one-dimensional unitary unit in the nonlinear unitary optical device according to one embodiment of the present invention;
FIG. 4A to 4C illustrate examples of an operation of a two-dimensional unitary gate in the nonlinear unitary optical device according to one embodiment of the present invention;
FIG. 5 is a configuration for measuring the expressivity of a two-dimensional unitary gate in the nonlinear unitary optical device according to one embodiment of the present invention;
FIGs. 6A and 6B show diagrams illustrating linear and nonlinear evolution trajectories and changes in trajectory length measured in FIG. 5;
FIGs. 7A and 7B show diagrams illustrating a state after performing linear and nonlinear operations measured in FIG. 5 and a coverage of an output space; and
FIGs. 8A to 8E show diagrams illustrating a regression problem using a deep neural network for the nonlinear unitary optical device according to one embodiment of the present invention.

DETAILED DESCRIPTION OF EXEMPLARY EMBODIMENTS

Hereinafter, embodiments of a nonlinear unitary optical device according to one embodiment of the present invention is described.

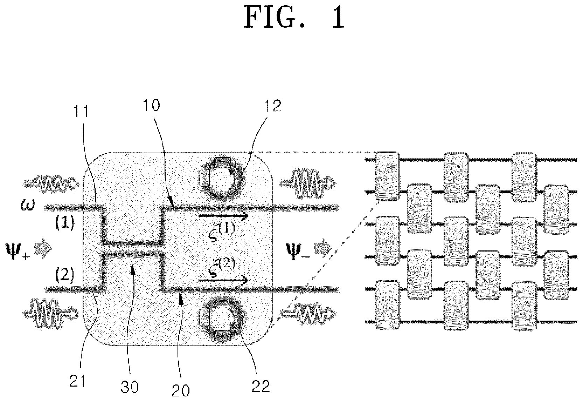

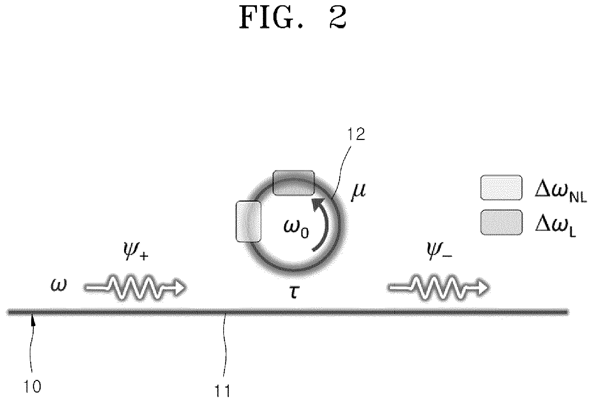

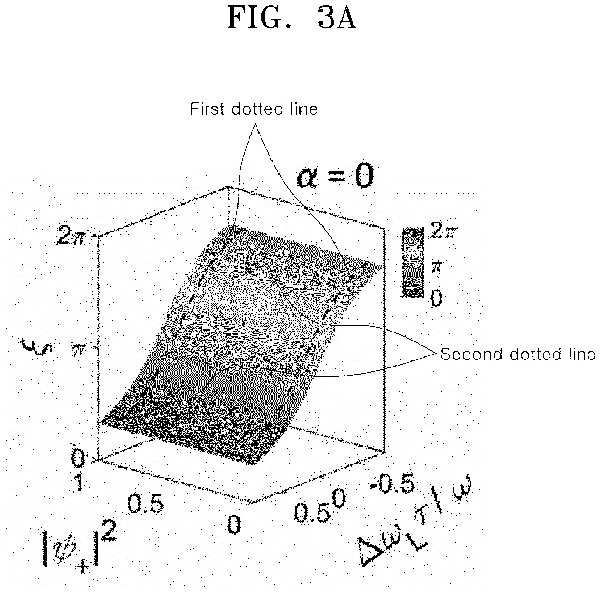

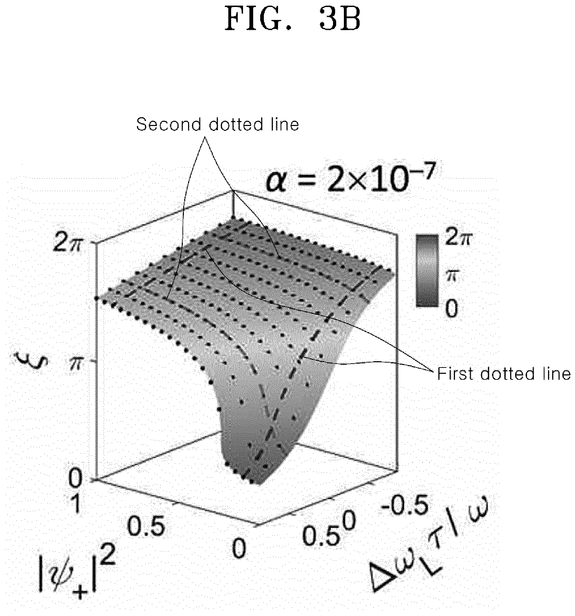

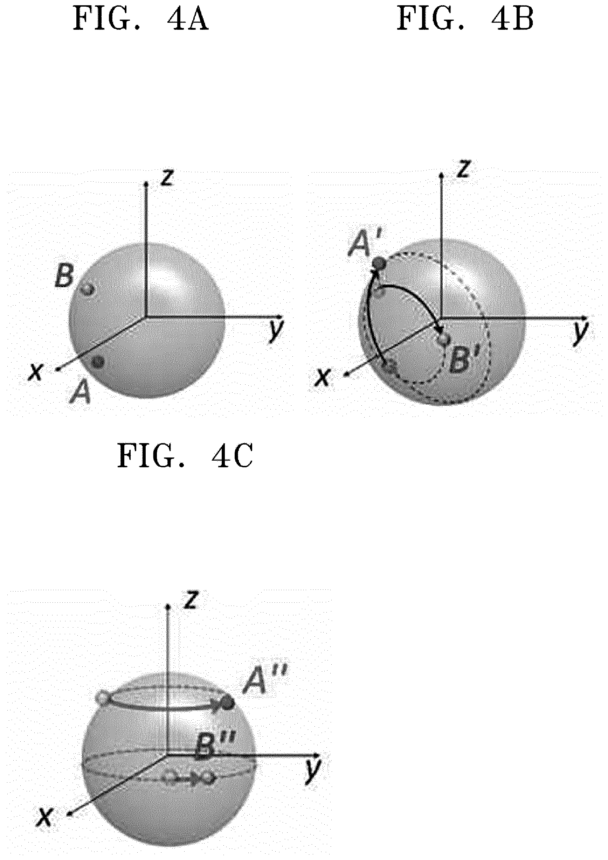

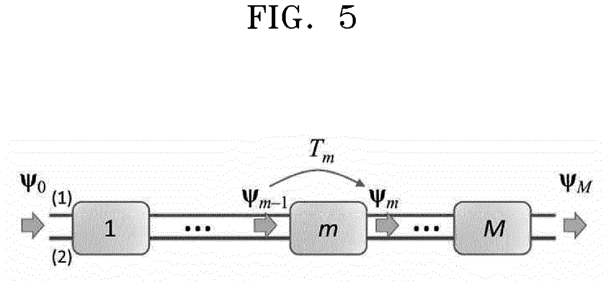

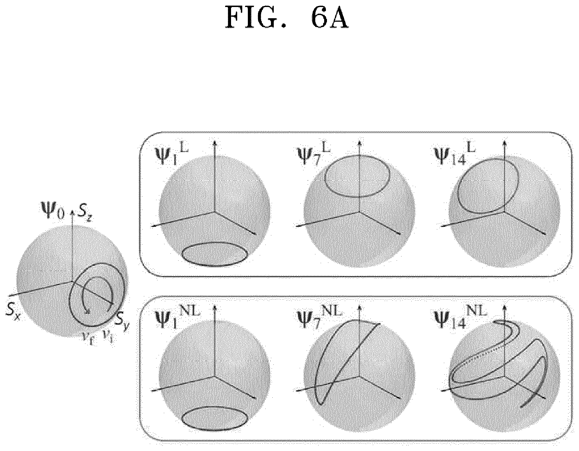

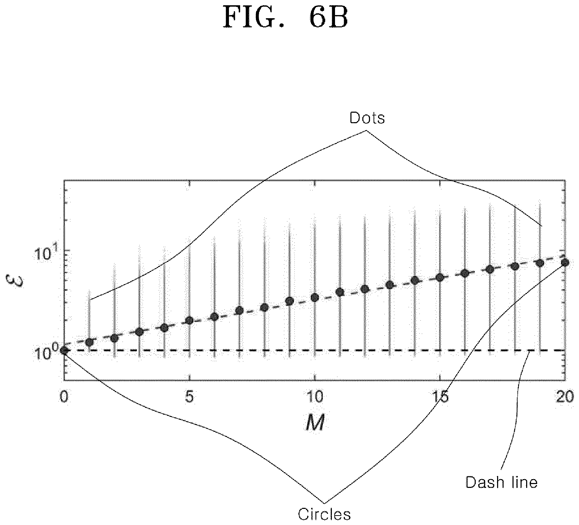

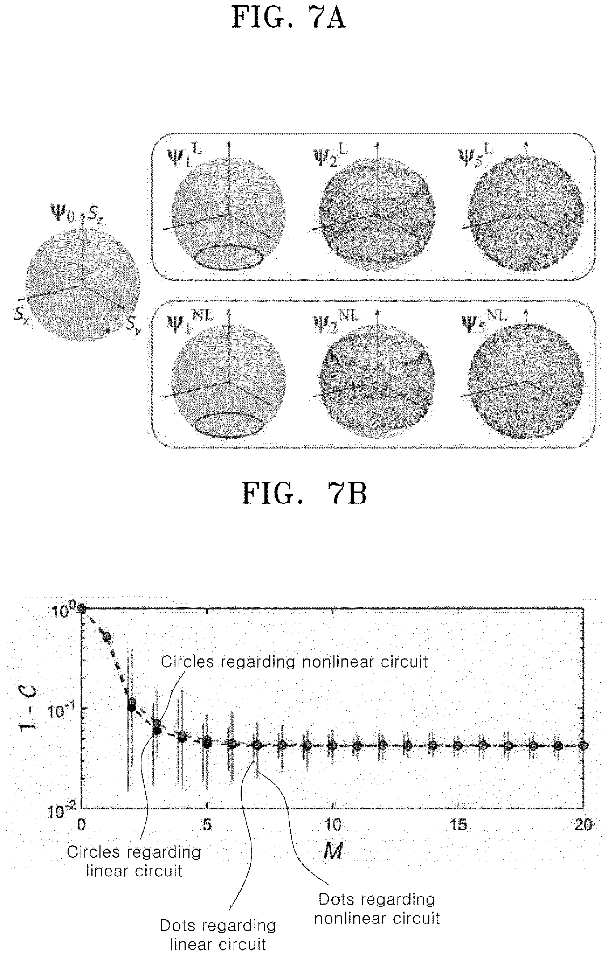

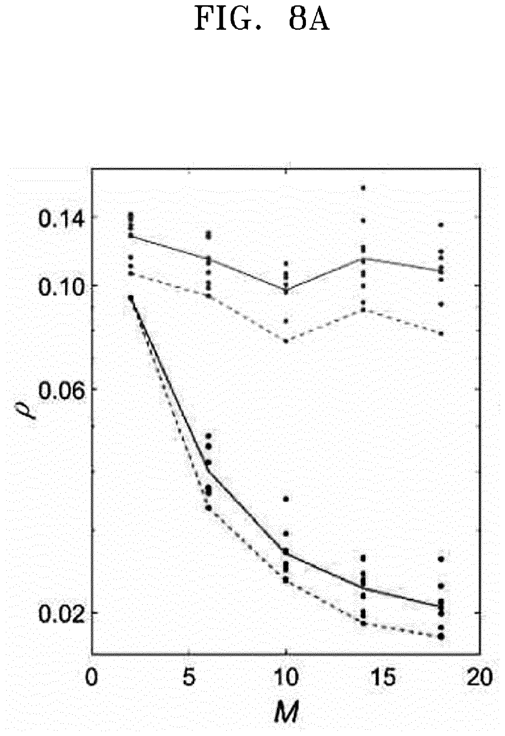

FIG. 1 is a diagram illustrating a nonlinear unitary optical device according to one embodiment of the present invention. FIG. 2 is a diagram illustrating a one-dimensional unitary unit which is a basic circuit component of the nonlinear unitary optical device according to one embodiment of the present invention. FIGs. 3A and 3B show diagrams illustrating linear and nonlinear phase shift values of the one-dimensional unitary unit in the nonlinear unitary optical device according to one embodiment of the present invention. FIGs. 4A to 4C illustrate examples of an operation of a two-dimensional unitary gate in the nonlinear unitary optical device according to one embodiment of the present invention. FIG. 5 illustrates a configuration for measuring expressivity of the two-dimensional unitary gate in the nonlinear unitary optical device according to one embodiment of the present invention. FIGs. 6A and 6B show diagrams illustrating linear and nonlinear evolution trajectories and changes in trajectory length measured in FIG. 5. FIGs. 7A and 7B show diagrams illustrating a state after linear and nonlinear operations measured in FIG. 5 and a coverage of an output space. FIGs. 8A to 8E show diagrams illustrating a regression problem using a deep neural network (DNN) for the nonlinear unitary optical device according to one embodiment of the present invention.

As shown in FIG. 1, the nonlinear unitary optical device according to one embodiment of the present invention may include a first nonlinear unitary unit 10 of one dimension positioned on an upper optical channel, a second nonlinear unitary unit 20 of one-dimension positioned on a lower optical channel, and an interferometer 30 that couples the first nonlinear unitary unit 10 and the second nonlinear unitary unit 20.

Here, the first nonlinear unitary unit 10 may include a first waveguide 11 connected to the upper optical channel and a first resonator 12 coupled to a side surface of the first waveguide 11.

In addition, the first resonator 12 may have a first resonant frequency and may be side-coupled to the first waveguide 11 with strength defined by a coupling lifetime.

Meanwhile, the first resonator 12 may adjust a resonance change by including any one of an electro-optical modulation device and a thermo-optical modulation device.

The second nonlinear unitary unit 20 may include a second waveguide 21 connected to the lower optical channel and a second resonator 22 coupled to a side surface of the second waveguide 21.

In addition, the second resonator 22 may have a second resonant frequency and be side-coupled to the second waveguide 21 with strength defined by a coupling lifetime.

Meanwhile, the second resonator 22 may adjust a resonance change by including any one of an electro-optical modulation device and a thermo-optical modulation device.

The interferometer 30 may couple the first nonlinear unitary unit 10 and the second nonlinear unitary unit 20 through a Mach-Zehnder interferometer (MZI).

More specifically, the first nonlinear unitary unit 10 and the second nonlinear unitary unit 20 may be provided as one-dimensional nonlinear unitary units as shown in FIG. 2.

That is, the first nonlinear unitary unit 10 may include the resonator 12 and the waveguide 11.

The resonator 12 may have a specific resonant frequency $\omega_0$ and may be side-coupled to the waveguide 11 with strength defined by a coupling lifetime $\tau$. Such a configuration represents a process in which an input wave $\psi^+$ is introduced into the resonator 12 and an output wave $\psi^-$ is generated according to the reaction of the resonator 12.

In the resonator 12, a phase shift occurs according to Equation 1.

[Equation 1]

$$\psi^- = e^{-i\xi}\psi^+$$

Here, $\xi$ is defined as a nonlinear function and is determined by a linear resonance change $\Delta\omega_L$ and a nonlinear resonance change $\Delta\omega_{NL}$.

In this case, the linear resonance change $\Delta\omega_L$ may be adjusted by the electro-optic modulation device or the thermo-optic modulation device, and the nonlinear resonance change $\Delta\omega_{NL}$ may be defined based on self-phase modulation.

Here, the nonlinear resonance change $\Delta\omega_{NL}$ is induced by an optical Kerr effect as provided in Equation 2.

[Equation 2]

$$\Delta\omega_{NL} = -\alpha|\mu|^2 \quad (\alpha \geq 0)$$

Here, $\alpha$ is determined by a Kerr coefficient and a spatial distribution of a mode.

Such a configuration may support programming of nonlinearities by enabling control of $\Delta\omega_{NL}$ and $\Delta\omega_L$.

FIG. 3 illustrates linear and nonlinear phase shift values of a unit device of FIG. 2.

When $\Delta\omega_{NL}=0$ (no nonlinear effect present), a phase change depends on only a value of $\Delta\omega_L$ and is not affected by input intensity $|\psi_+|^2$. Such a linear characteristic may satisfy Equation 3.

[Equation 3]

$$\xi = \xi(\Delta\omega_L)$$

In this way, a phase change may be perfectly controlled simply by adjusting $\Delta\omega_L$.

Meanwhile, when $\Delta\omega_{NL}\neq0$ (a nonlinear effect is activated), a phase change may be determined by a combination of $\Delta\omega_L$ and $|\psi_+|^2$. In this case, a phase change $\xi$ may be expressed as a nonlinear function as provided in Equation 4.

[Equation 4]

$$\xi = \xi(|\psi^+|^2, \Delta\omega_L)$$

By adjusting $\Delta\omega_L$, a nonlinear phase change caused by $\Delta\omega_{NL}$ may also be controlled.

FIGS. 3A and 3B visually show how a phase change occurs according to $\Delta\omega_L$, the input intensity $|\psi_+|^2$ for each operation, and the characteristics of linear and nonlinear operations.

Surfaces and black dots may represent analytical and numerically calculated results, respectively, and it can be seen that the analytical and numerically calculated results perfectly match.

In this case, a first dotted line indicates $|\psi_+|^2=0.1005$ or $0.8995$, and a second dotted line indicates $\Delta\omega_L,=\pm0.5161$ $\omega_0/\tau$. In this case, $\omega0 = 1$, and $\tau = 2000/\omega_0$.

Therefore, as shown in FIG. 1, the nonlinear unitary optical device may include the first nonlinear unitary unit 10, the second nonlinear unitary unit 20, and the MZI 30.

In this case, a phase change may be expressed as a difference between an upper channel 1 and a lower channel 2 and may be expressed as provided in Equation 5.

[Equation 5]

$$\Delta\xi = \xi^{(1)} - \xi^{(2)}$$

Therefore, the nonlinear unitary optical device performs a transformation in which rotation operations for an x-axis and a z-axis are combined on a Bloch sphere, thereby converting an input wave $\psi_+$ into an output wave $\psi_-$. In this case, a transformation matrix U may be expressed as provided in Equation 6.

[Equation 6]

$$U = R_z(\Delta\xi)R_x\left(-\frac{\pi}{2}\right)$$

Here, $R_x$ and $R_z$ denote an x-axis rotation and a z-axis rotation of the Bloch sphere, respectively.

In this case, the transformation matrix may be nonlinearly changed according to an input state and be adjusted by a programmable phase change $\Delta\omega_L(1,2)$.

Therefore, as shown in FIG. 1, a high-dimensional nonlinear circuit may be constructed based on the nonlinear unitary optical device according to the present embodiment.

In this case, multidimensional nonlinear units may be arranged using a Reck or Clements design, which enables high-dimensional nonlinear operations. The circuit is suitable for a DNN that requires high-dimensional expressivity.

As shown in FIG. 4 describing the operation of the two-dimensional unitary gate in the nonlinear unitary optical device, FIG. 4A illustrates input states A and B and an initial intensity and a phase distribution of two channels.

FIG. 4B illustrates intermediate states A' and B' that undergo the MZI and are transformed by x-axis rotation. FIG. 4C illustrates final output states A" and B" after nonlinear transformation by the first and second nonlinear unitary units, and output states are changed differently due to an interaction between a nonlinear phase change and input intensity.

FIG. 5 illustrates a configuration for measuring the expressivity of the two-dimensional unitary gate in the nonlinear unitary optical device. The nonlinear unitary optical device converts an input state $\psi 0$ into an output state $\psi_M$, and an $m^{th}$ gate corresponds to a NU matrix $T_m$ and converts an input wave $\psi_{m-1}$ into an output wave $\psi_m$. The correspondence between an input and an output is expressed as a state on a Bloch sphere based on spherical coordinates $(\theta, \varphi)$, and the complexity of a correspondence relationship is changed according to a circuit depth.

FIG. 6 shows linear and nonlinear evolution trajectories (see FIG. 6A) and changes in trajectory length (see FIG. 6B) measured in a circuit structure of FIG. 5.

In this case, a linear circuit maintains an original geometric form of a trajectory (upper part of FIG. 6A), but a nonlinear circuit increases the complexity of a trajectory (lower part of FIG. 6A).

For each type of operation, circuit lengths M are shown as being 1, 7, and 14. Meanwhile, an increased amount of a trajectory length according to a circuit depth may be defined according to Equation 7.

[Equation 7]

$$\varepsilon\big(\{\psi_0(v)\}; v_i \leq v \leq v_f\big) = \frac{\int_{v_i}^{v_f} \left\|\frac{dS_M}{dv}\right\| dv}{\int_{v_i}^{v_f} \left\|\frac{dS_0}{dv}\right\| dv}$$

Here, $\{\psi_0(v)\}$ denotes an input state trajectory defined by parameters v ranging from $v_i$ to $v_f$, S represents a point on the Bloch sphere, $S_0$ represents the initial input, and $S_M$ represents the point after M gates have passed.

As shown in FIG. 6B, in the nonlinear circuit, a trajectory length increases exponentially as a depth increases, which is a feature that describes powerful expressivity of a DNN.

Here, dots indicate trajectory length increase amounts of 1,000 random nonlinear systems for 20 different input trajectories, and a circle denotes an ensemble means for each M value. In addition, a dash line indicates a case of the linear circuit, that is, a case in which a trajectory length is maintained.

FIG. 7 shows diagrams illustrating a state after performing linear and nonlinear operations measured in the circuit structure of FIG. 5 and a coverage of an output space.

Here, the coverage of the output space may be defined based on entropy as provided in Equation 8.

[Equation 8]

$$C = -\frac{1}{\log N_{cell}} \sum_{i,j} p_{ij} \log(p_{ij})$$

Here, $N_{cell}$ denotes the number of 2D cells when the output space is discretized, and $p_{ij}$ denotes a probability that an output state exists in an $(i, j)^{th}$ cell.

In this case, the coverage is between 0 and 1, and when C=1, the coverage is a complete coverage of the output space.

FIG. 7A illustrates that a coverage increases rapidly as a circuit depth for a specific input (M=1, 2, or 5) increases. As shown in FIG. 7B, when a circuit depth is sufficiently deep (M>7), a coverage of a nonlinear circuit maintains a similar level to that of a linear circuit, and the entire output space is efficiently used.

Dots and circles regarding the linear circuit indicate coverage gaps 1-C for the linear circuit, and dots and circles regarding the nonlinear circuit indicate coverage gaps 1-C for the nonlinear circuit. Dots regarding the linear circuit and dots regarding the nonlinear circuit indicate coverages when an input space is discretized into 20,000 points, and circles regarding the linear circuit and circles regarding the nonlinear circuit indicate ensemble averages thereof. In this case, for the sake of ease of interpretation, results for the linear circuit are illustrated as being slightly biased from an M value.

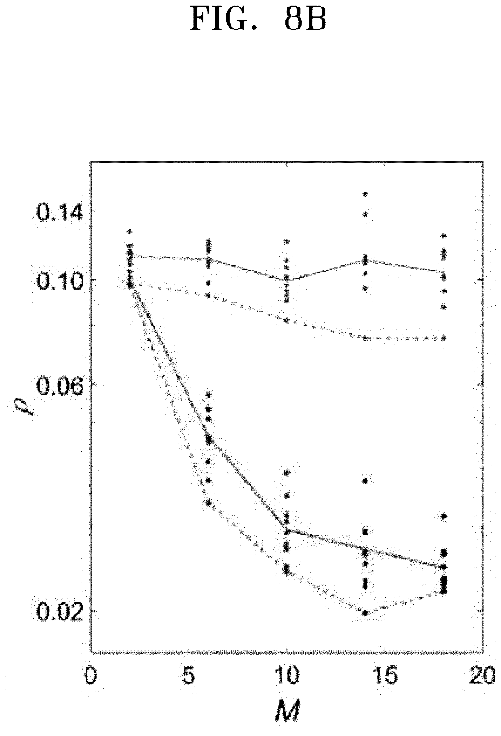

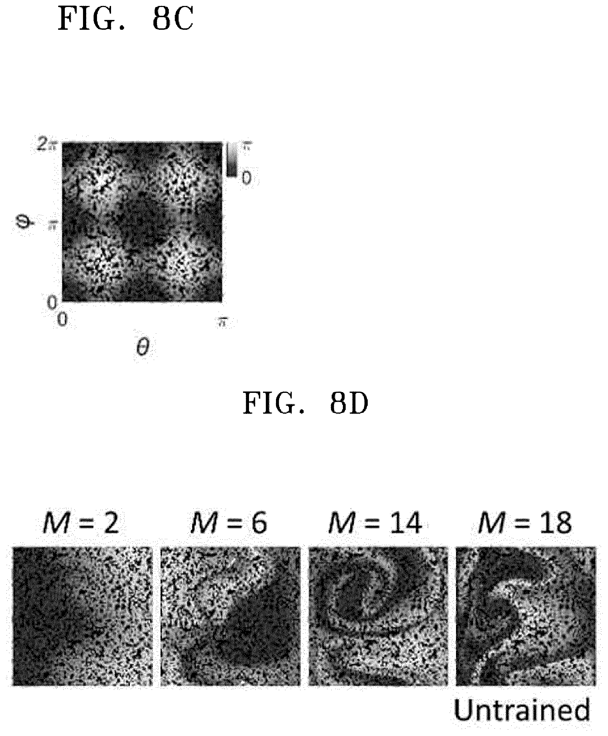

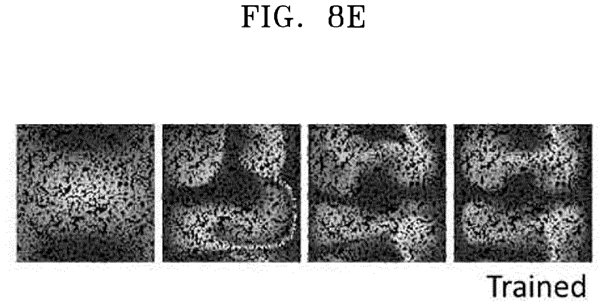

FIG. 8 shows a solution of a regression problem using a DNN of a nonlinear unitary circuit.

In an NU DNN of the nonlinear unitary circuit, as depth increases, a mean squared error (MSE) for a non-convex regression problem decreases. This is evidenced by a decrease according to a depth M of a cost function for training data (see FIG. 8A) and test data (see FIG. 8B) and demonstrates the effectiveness of the NU DNN in complex function learning.

FIG. 8C shows a target function, and FIGS. 8D and 8E show NU DNN outputs before and after training, respectively.

That is, the trained DNN shows high agreement with the target function. In FIGS. 8E to 8E, 5,000 test data points are plotted.

As described above, according to a nonlinear unitary optical device according to an embodiment of the present invention, an optical nonlinearity preserving a norm can be provided through self-phase modulation in an optical neural network, and a nonlinear unitary operation having high expressivity of a DNN can be implemented through control of a phase shifter.

In addition, according to the present invention, by implementing an optical neural network in which linear and nonlinear expressivities are integrated through norm-preserving nonlinear unitary operations, the burden of electronic signal processing and problems caused by changes in light intensity can be solved, and thus an exponential increase in trajectory length and a coverage of an output space can be achieved to enable high expressivity and stable learning required for deep learning. An energy-efficient and high-speed deep learning accelerator can be implemented to have high utilization value as next-generation artificial intelligence hardware.

A nonlinear unitary optical device according to an aspect of the present invention can provide optical nonlinearity that preserves a norm through self-phase modulation in an optical neural network and can implement a nonlinear unitary operation with high expressivity of a deep neural network through control of a phase shifter.

In addition, according to the present invention, by implementing an optical neural network in which linear and nonlinear expressivities are integrated through norm-preserving nonlinear unitary operations, the burden of electronic signal processing and problems caused by changes in light intensity can be solved, and thus an exponential increase in trajectory length and a coverage of an output space can be achieved to enable high expressivity and stable learning required for deep learning. An energy-efficient and high-speed deep learning accelerator can be implemented to have high utilization value as next-generation artificial intelligence hardware.

However, the effects that may be achieved through the present disclosure are not limited to the above-described effects, and other technical effects that are not described herein will be clearly understood by those skilled in the art based on the following disclosure.

**Claims**

1. A nonlinear unitary optical device comprising:

   a first nonlinear unitary unit of one dimension positioned on an upper optical channel;
   a second nonlinear unitary unit of one dimension positioned on a lower optical channel; and
   an interferometer configured to couple the first nonlinear unitary unit and the second nonlinear unitary unit.

2. The nonlinear unitary optical device of claim 1, wherein the first nonlinear unitary unit includes a first waveguide connected to the upper optical channel, and a first resonator coupled to a side surface of the first waveguide.

3. The nonlinear unitary optical device of claim 2, wherein the first resonator has a first resonant frequency and is side-coupled to the first waveguide with strength defined by a coupling lifetime.

**4.** The nonlinear unitary optical device of claim 2, wherein the first resonator includes a modulation device configured to adjust a resonance change.

**5.** The nonlinear unitary optical device of claim 4, wherein the modulation device is any one of an electro-optical modulation device and a thermo-optical modulation device.

**6.** The nonlinear unitary optical device of claim 1, wherein the second nonlinear unitary unit includes a second waveguide connected to the lower optical channel, and a second resonator coupled to a side surface of the second waveguide.

**7.** The nonlinear unitary optical device of claim 6, wherein the second resonator has a second resonant frequency and is side-coupled to the second waveguide with strength defined by a coupling lifetime.

**8.** The nonlinear unitary optical device of claim 6, wherein the second resonator includes a modulation device configured to adjust a resonance change.

**9.** The nonlinear unitary optical device of claim 8, wherein the modulation device is any one of an electro-optical modulation device and a thermo-optical modulation device.

**10.** The nonlinear unitary optical device of claim 1, wherein the interferometer is a Mach-Zehnder interferometer.

FIG. 1

FIG. 2

# FIG. 3A

# FIG. 3B

FIG. 4A          FIG. 4B

FIG. 4C

FIG. 5

# FIG. 6A

# FIG. 6B

# FIG. 7A

# FIG. 7B

# FIG. 8A

# FIG. 8B

FIG. 8C

FIG. 8D

FIG. 8E

Trained

## EUROPEAN SEARCH REPORT

**Application Number**

EP 25 15 6862

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER N TAIT ET AL: "The DREAM: An Integrated Photonic Thresholder", JOURNAL OF LIGHTWAVE TECHNOLOGY, IEEE, USA, vol. 31, no. 8, 1 April 2013 (2013-04-01), pages 1263-1272, XP011495535, ISSN: 0733-8724, DOI: 10.1109/JLT.2013.2246544 * the whole document * | 1-3,6,7, 10 | INV. G02F1/21 G02F1/225 G06N3/067 ADD. G02F1/01 |
| X | CHAORAN HUANG ET AL: "Programmable Silicon Photonic Optical Thresholder", ARXIV.ORG, CORNELL UNIVERSITY LIBRARY, 201 OLIN LIBRARY CORNELL UNIVERSITY ITHACA, NY 14853, 23 July 2019 (2019-07-23), XP081465450, * the whole document * | 1-10 | |

**TECHNICAL FIELDS SEARCHED (IPC)**

G02F
G06N

The present search report has been drawn up for all claims

| Place of search | Date of completion of the search | Examiner |
|---|---|---|
| The Hague | 25 July 2025 | Topak, Eray |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210005273